# EUROPÄISCHE PATENTSCHRIFT

(11) **EP 1 857 689 B1**
(45) Veröffentlichungstag und Bekanntmachung des Hinweises auf die Patenterteilung: **21.12.2016**
(21) Anmeldenummer: 07009655.7
(22) Anmeldetag: 15.05.2007
(51) Int. Cl.: F16B 12/40, F16B 12/50

(54) **Modulares Tischgestell**
Modular table frame
Châssis modulaire pour table

(30) Priorität: 19.05.2006 AT 8732006
(43) Veröffentlichungstag der Anmeldung: 21.11.2007
(73) Patentinhaber: Bene AG, 3340 Waidhofen an der Ybbs (AT)
(72) Erfinder: Pichler, Herbert, Ing., 3341 Ybbsitz (AT)
(74) Vertreter: Ofner, Clemens

(56) Entgegenhaltungen:
- EP-A1- 1 134 170
- EP-A1- 1 169 946
- FR-A- 1 321 921
- GB-A- 1 265 889
- US-A- 4 582 001
- US-A- 4 864 795
- US-A- 5 403 110

## Beschreibung

Die Erfindung betrifft ein modulares Tischgestell entsprechend dem Oberbegriff des Anspruches 1.

Aus dem Stand der Technik sind unterschiedliche Verbindungsmöglichkeiten zur Verbindung von Profilen, insbesondere für Tischgestelle, bekannt. So beschreibt z.B. die DE 298 09 994 U1 ein modular aufgebautes Tischgestell mit i) mindestens 3 Standbeinen, die am oberen Ende eine quer verlaufende Aufnahmeöffnung aufweisen, ii) mehreren Verbindungsholmen beliebig bestimmbarer Länge als Längs- oder Querholme, deren Enden in den quer verlaufenden Aufnahmeöffnungen der Standbeine aufgenommen und befestigt sind oder im rechten Winkel an anderen Verbindungsholmen stumpf anstoßen und iii) Verbindungsklammern in T-Form, die die rechtwinkelig aufeinander stoßenden Verbindungsholme formschlüssig umfassen und miteinander verbinden.

Die Längs- und Querholme sind in einem regelmäßigen Lochraster mit (im aufgebauten Tischgestell) senkrecht verlaufenden Durchgangslöchern versehen, die quadratförmig sind. Die Verbindungsklammer besteht aus einem Oberteil und einem Unterteil, die von beiden Seiten auf die Längs- und Querholme aufgesetzt und miteinander verschraubt sind. Das Oberteil und das Unterteil weisen einen durchgehenden Kanal sowie einen Querkanal auf, in die die Längs- und Querholme eingelegt sind. Auf der Innenseite des Ober- und des Unterteils sind Nockenvorsprünge angeordnet, deren Form der Form der Durchgangslöcher angepasst ist, also quadratisch ist. Diese Nockenvorsprünge haltern das Oberteil und das Unterteil formschlüssig gegenüber den Längs- und Querholmen, sodass die Montagefreudigkeit und Stabilität verbessert werden.

Ein weiterer Profilverbinder ist aus der DE 296 20 314 U1 bekannt. Es wird ein Profilverbinder für die Enden zweier aneinander stoßender Profile beschrieben, welcher einen in eine Profilnut eines ersten Profils einsetzbaren Nutenstein hat, durch den schräg zu seiner Längsachse eine Gewindebohrung hindurchführt, in welcher eine Stiftschraube angeordnet ist, welche sich im angezogenen Zustand mit ihrem Ende im Bereich des Nutengrundes der Profilnut abzustützen vermag, und bei dem der Nutenstein mit einem zum Einsetzen in eine Profilnut eines mit dem ersten Profil zu verbindenden zweiten Profils ausgebildeten Verbindungskörper versehen ist. Der Profilverbinder ermöglicht beim Verbinden von Profilen diese zwangsläufig in einen zueinander bündigen Zustand zu bringen. Es ist dabei der Verbindungskörper übereinstimmend mit dem Nutenstein und in einer Ebene mit diesem ausgebildet und genau wie der Nutenstein eine schräge Gewindebohrung mit einer Stiftschraube vorhanden.

Die EP 1 134 170 A1 beschreibt eine modulartig zusammensetzbare Struktur für Lagerregale. Diese besteht im Wesentlichen aus vertikalen Pfosten, aus Abstandsstücken, aus Längselementen, aus Ablagen und aus Befestigungs- und/ oder Verbindungselementen. Die Pfosten, die Abstandsstücke und die Längselemente weisen einen quadratischen, rechteckigen oder runden Querschnitt auf und sind die Auflagen selbsttragend oder auf einer tragenden Struktur montiert. Die Pfosten, die Abstandsstücke und die Längselemente sind mindestens an einer der Außenflächen an einem oder an mehreren Bereichen oder entlang der gesamten Mittelachse mit Einbuchtungen versehen, deren rückseitige Ausformungen in das Profilinnere ragen, wobei die Verbindung zwischen diesen Strukturelementen durch stirnseitige Auflage eines Strukturelementes gegen eine der Seitenflächen des anderen Strukturelementes erfolgt und durch die Verspannung der Verbindungselemente eine Kraftkomponente entsteht, welche die Stirnfläche eines Strukturelementes an die Seitenfläche des zweiten Strukturelementes anpresst.

Aufgabe der vorliegenden Erfindung ist es eine Verbindungsvorrichtung zur form- und kraftschlüssigen Verbindung von Profilen eines Tischgestells zur Verfügung zu stellen.

Diese Aufgabe wird durch die Merkmale im Kennzeichenteil des Anspruches 1 gelöst. Vorteilhaft dabei erweist sich, dass eine während der Montage vorerst formschlüssige Verbindung der Konusse durch das Einführen der Konusse in die komplementären Ausnehmungen der Profile durch Anziehen von Verbindungselementen, wie z.B. Schrauben, in eine kraftschlüssige Verbindung - eine Presspassung - übergeht. Dadurch wird eine spielfreie Verbindung, die weder von der Außenform der Profile noch von deren Toleranzen bestimmt ist, hergestellt.

Die konusförmigen Vorsprünge weisen ein mit dem Bauteil verbundenes Ende und ein freies Ende auf, wobei sich die Vorsprünge in Richtung des freien Endes verjüngen, wodurch ein einfaches Zusammenfügen der Verbindungsvorrichtung mit dem Profil erfolgen kann, weil der verjüngende Teil des konusförmigen Vorsprungs einfach in die Ausnehmung des Profils eingeführt werden kann. Durch die verjüngende Ausbildung weist das freie Ende des konusförmigen Vorsprungs einen geringeren Durchmesser wie die Ausnehmung des Profils auf, wodurch die Montage der beiden Teile vereinfacht wird.

In einer Weiterbildung der Erfindung weist der Winkel des sich zumindest einen verjüngenden konusförmigen Vorsprungs einen Wert ausgewählt aus einem Bereich mit einer oberen Grenze von 45 °, vorzugsweise 40 °, insbesondere 30 °, und einer unteren Grenze von 0,5 °, vorzugsweise 1 °, insbesondere 5 °, auf, wodurch ein sehr breites Spektrum der Neigung des konusförmigen Vorsprungs zur Verfügung steht und an die jeweiligen Bedürfnisse angepasst werden kann ohne die sich durch die Verjüngung ergebenden Vorteile, wie die einfache Montage der Verbindungsvorrichtung im Profil, negativ zu beeinflussen, und zudem durch Anziehen, beispielsweise von Verbindungsschrauben, eine Presspassung zu erzielen.

Der zumindest eine konusförmige Vorsprung weist eine Bauhöhe auf, wobei der Winkel über die Bauhöhe variieren kann, wodurch sich beispielsweise der konusförmige Vorsprung im freien Endbereich stark verjüngen kann, wohingegen im anderen Endbereich, mit welchem der Vorsprung am Bauteil befestigt ist, eine annähernd zylindrische Seitenwand, also mit einer Neigung von annähernd 0°, ausgebildet ist, wodurch vorteilhafter Weise erzielt wird, dass der Vorsprung leicht in die Ausnehmung des Profils eingepasst werden kann, die Montage somit leicht von der Hand geht und dennoch eine sehr gute Presspassung resultiert.

Der konusförmige Vorsprung kann einen Durchbruch oder Sackloch, gegebenenfalls mit einem Gewinde aufweisen, wodurch eine kraftschlüssige Verbindung der Bauteile der Verbindungsvorrichtung und den dazwischen angeordneten Profilen erfolgen kann.

Durch die annähernd mittige Anordnung des Durchbruchs oder des Sacklochs im Konus wird die Ausbildung einer form- und kraftschlüssigen Verbindung erleichtert.

Durch annähernd kreisrunde Ausbildung des konusförmigen Vorsprungs wird unter anderem die bei der Montage vorerst formschlüssige Verbindung in eine kraftschlüssige Verbindung überführt, wodurch vorteilhafter Weise eine spielfreie Verbindung der Verbindungseinrichtung mit dem Profil erfolgt und in weiterer Folge somit der einzelnen Profile eines modularen Bauteils. Zudem kann die Oberfläche des konusförmigen Vorsprungs eine Struktur aufweisen, wie z.B. gerillt, gefurcht, genoppt, gezackt, etc. sein, wodurch die bereits erwähnten Effekte verstärkt werden.

In einer alternativen Ausführungsform können die Bauteile zwei Schenkel aufweisen, die in einem Winkel zueinander angeordnet sein, wodurch beispielsweise eine rechtwinkelige Anbindung, wie sie beispielsweise bei Zargeneckknoten eines Schreibtisches erforderlich sind, realisierbar werden, sofern die Schenkel des Bauteils zueinander ebenfalls in einem Winkel von 90° angeordnet sind.

Der Bauteil kann als obere bzw. untere Platte ausgebildet sein und erhabene Seitenflächen aufweisen, die das Profil zumindest bereichsweise umgreifen und somit vorteilhafter Weise eine Führung für das Profil bei der Montage und einen Formschluss bilden.

Die Innenseite kann eine flächige Vertiefung aufweisen, wobei in dieser flächigen Vertiefung der konusförmige Vorsprung angeordnet ist, wodurch beispielsweise das Profil auch an der Stirnseite eine zusätzliche Führung bzw. Begrenzung erhält und somit äußerst präzise positioniert und stabilisiert wird. Durch die Anordnung des konusförmigen Vorsprungs in der flächigen Vertiefung wird die Genauigkeit der Positionierung des Profils in Bezug auf die Verbindungseinrichtung abermals verbessert. Vorteilhafter Weise können durch die flächige Vertiefung auch Profile unterschiedlichen Querschnitts mit der erfindungsgemäßen Verbindungseinrichtung miteinander verbunden werden, wenn beispielsweise die Vertiefung in jeweils nur einem Schenkel der gegenüber liegenden Bauteile angeordnet ist.

An der Innenseite können Erhebungen, insbesondere in Form von Stegen ausgebildet sein, wodurch beispielsweise zwei zueinander parallel angeordnete Profile von der gleichen Verbindungseinrichtung gehaltert werden können und durch diesen Steg bzw. diese Erhebung ebenfalls fixiert bzw. gestützt werden.

Die Außenseite des Bauteils kann gekrümmt sein oder eine Abstufung aufweisen, wodurch die Außenform des Bauteils an den Gegenstand, in welchem die Verbindungsvorrichtung zum Einsatz kommt, angepasst werden kann.

Der Bauteil bzw. die Platte kann gebogen bzw. geknickt sein, wodurch eine beliebige Stellung bzw. Anordnung in einem beliebigen Winkel der zu verbindenden Profile ermöglicht wird.

Die Verbindungseinrichtung kann aus Kunststoff, Metall z.B. Stahl, Aluminium, Zink oder deren Legierungen gebildet sein, wobei diese vorzugsweise mittels Druckgussverfahren hergestellt werden und dadurch in einem formgebenden Verfahren, welches eine ökonomische Herstellung der Verbindungseinrichtung ermöglicht, hergestellt werden können.

Durch die Anordnung des zumindest eines konusförmigen Vorsprungs in der zumindest einen komplementären Ausnehmung des Profils wird eine formschlüssige Verbindung der beiden ermöglicht, die auch spielfrei ist in einer modularen Baueinheit verwirklicht. Die zur konusförmigen Ausnehmung komplementäre Ausnehmung ist vorzugsweise kreisrund und daher großtechnisch sehr exakt zu produzieren. Auf diese Weise ergibt sich eine winkelgenaue, hoch belastbare Verbindung, die lediglich durch Bohren und Ablängen der Profile herstellbar ist.

In einer Weiterbildung ist ein Verbindungselement, insbesondere Schraube, im Durchbruch bzw. Sackloch angeordnet, wodurch eine kraftschlüssige Verbindung der Verbindungsvorrichtung mit zumindest einem der Profile erfolgen kann.

Weiters können die zu verbindenden Profile in einem Winkel von 180° zueinander angeordnet sein, sodass bei zueinander rechtwinkelig verbundenen Profilen eine Profilfläche von Verbindungsvorrichtungen frei bleibt. Dies kann besonders bei kantenbündigen Tischzargensystemen Anwendung finden, weil die Sichtflächen von Befestigungselementen frei bleiben, wie es besonders bei freistehenden, allseitig sichtbaren Tischen vorteilhaft ist.

Zum besseren Verständnis der Erfindung wird diese anhand der nachfolgenden Figuren näher erläutert.

Es zeigen jeweils in stark vereinfachter, schematischer Darstellung:
- Fig. 1a: eine Seitenansicht einer erfindungsgemäßen Verbindungseinrichtung;
- Fig. 1b: eine Seitenansicht einer erfindungsgemäßen modularen Baueinheit;
- Fig. 1c: einen Schnitt durch eine erfindungsgemäße modulare Baueinheit gemäß der Ausführung in Fig. 1b;
- Fig. 2a: eine Seitenansicht einer alternativen Ausführungsform einer erfindungsgemäßen Verbindungseinrichtung;
- Fig. 2b: eine Seitenansicht einer nicht erfindungsgemäßen modularen Baueinheit;
- Fig. 2c: einen Schnitt durch die modulare Baueinheit gemäß Fig. 2b;
- Fig. 3a: eine Seitenansicht einer alternativen Ausführungsform einer erfindungsgemäßen Verbindungseinrichtung;
- Fig. 3b: eine Seitenansicht einer nicht erfindungsgemäßen modularen Baueinheit;
- Fig. 3c: einen Schnitt durch die modulare Baueinheit gemäß Fig. 3b;
- Fig. 4a: eine Seitenansicht einer alternativen Ausführungsform einer modularen Baueinheit mit einer Verbindungseinrichtung gemäß Fig. 3a;
- Fig. 4b: einen Schnitt einer erfindungsgemäßen modularen Baueinheit gemäß Fig. 4a;
- Fig. 5a: eine Seitenansicht einer alternativen Ausführungsform einer erfindungsgemäßen Verbindungseinrichtung;
- Fig. 5b: eine Seitenansicht einer nicht erfindungsgemäßen modularen Baueinheit;
- Fig. 5c: einen Schnitt durch die modulare Baueinheit gemäß Fig. 5b;
- Fig. 6a: eine Draufsicht auf einen Bauteil einer nicht erfindungsgemäßen Verbindungseinrichtung;
- Fig. 6b: eine Seitenansicht einer nicht erfindungsgemäßen modularen Baueinheit;
- Fig. 7a: eine Seitenansicht einer alternativen Ausführungsform einer erfindungsgemäßen Verbindungseinrichtung;
- Fig. 7b: einen Schnitt durch eine erfindungsgemäße Verbindungseinrichtung gemäß Fig. 7a.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die Erfindung beschreibt eine Verbindungsvorrichtung 1 zur Verbindung von Profilen 2, insbesondere für Tischgestelle. Die Verbindungsvorrichtung 1 umfasst mehrere Bauteile 3 mit einer Außenseite 4, einer Innenseite 5 und Seitenflächen 6. An der Innenseite 5 ist ein Vorsprung 7, welcher konusförmig ausgebildet ist, angeordnet.

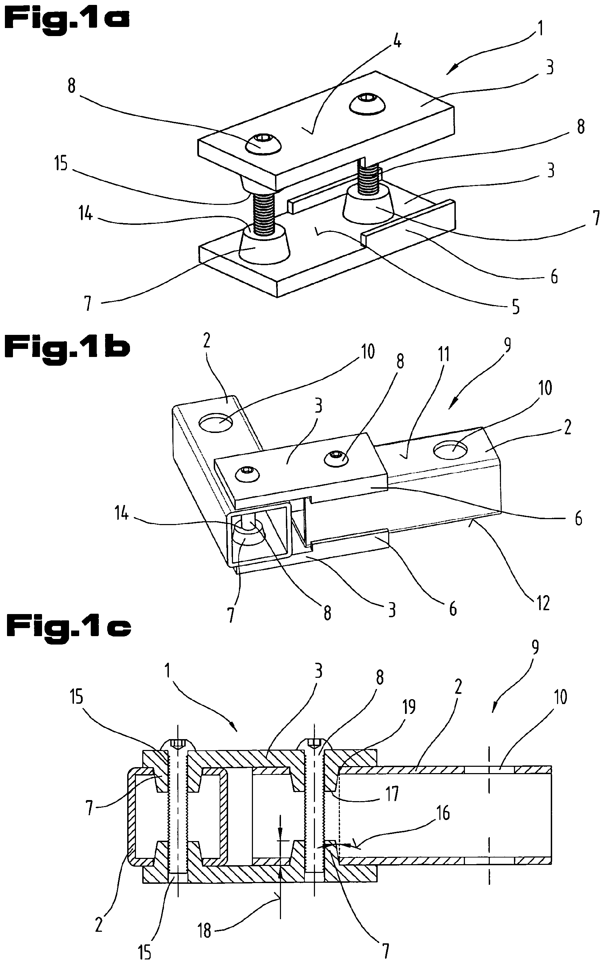

Fig. 1a zeigt eine erfindungsgemäße Verbindungsvorrichtung 1. Sie besteht aus zwei Bauteilen 3, welche an der Innenseite 5 jeweils zwei konusförmige Vorsprünge 7 angeordnet haben und vorstehende Seitenflächen 6 aufweisen, die zur Führung des Profils zwischen den beiden Bauteilen 3 dienen. Der konusförmige Vorsprung 7 weist in einem Bauteil 3 einen Durchbruch 15 auf, durch welchen ein Verbindungselement 8 gesteckt wird und der gegenüberliegende Bauteil 8 weist einen Sacklochbohrung 14 auf, in welche das Ende des Verbindungselements 8, insbesondere einer Schraube, gedreht wird.

Fig. 1b zeigt eine erfindungsgemäße modulare Baueinheit 9. Die modulare Baueinheit 9 besteht aus zwei Bauteilen 3 zwischen denen zwei Profile 2 im rechten Winkel zueinander angeordnet sind. Die Profile 2 weisen Ausnehmungen 10 komplementär zum konusförmigen Vorsprung 7 der Verbindungseinrichtung 1 auf. Die Ausnehmungen 10 können mehrfach, beispielsweise an der Ober- und der Unterseite 11, 12 des Profils 2 angeordnet sein. Die Profile 2 werden derart abgelängt, dass es möglich ist, dass ein Ende des Profils 2 an die Seitenfläche des anderen Profils 2 annähernd anstößt. Die Seitenflächen 6 des oberen und des unteren Bauteils 3 der Verbindungseinrichtung 1 umgreifen jeweils ein Profil 2. Die Seitenflächen 6 können als Führung für das Profil 2 verwendet werden. Durch den Durchbruch 15 des konusförmigen Vorsprungs 7 des oberen Bauteils 3 der Verbindungsvorrichtung 1 und durch die komplementäre Ausnehmung 10 des Profils 2 kann das Verbindungselement 8 zur Verbindung der Verbindungsvorrichtung 1 mit dem Profil 2 gesteckt bzw. geschraubt werden. An der gegenüberliegenden Seite des Profils 2 ist ebenfalls eine komplementäre Ausnehmung 10 zum konusförmigen Vorsprung 7 des Bauteils 3 der Verbindungseinrichtung 1 angeordnet, durch bzw. in welche das Verbindungselement 8 gesteckt wird. Im unteren Bauteil 3 befindet sich ebenfalls ein Durchbruch 15 oder ein Sackloch 14, gegebenenfalls mit einer Gewindebohrung, welches das Ende des Verbindungselements 8 aufnimmt. In Fig. 1b sind der obere und der untere Bauteil 3 jeweils mit einem Verbindungselement 8 mit dem jeweiligen Profil 2 verbunden.

Beispielsweise kann der Durchbruch 15 in oberen Bauteil 3 ohne Gewindebohrung und im unteren Bauteil 3 mit Gewindebohrung ausgestattet sein, um ein Verbindungselement 8, insbesondere eine Schraube, aufzunehmen.

In einer alternativen, nicht dargestellten Ausführungsform kann der obere und der untere Bauteil 3 mit dem Profil 2 auch über mehrere Verbindungselemente 8 verbunden werden, wobei der jeweilige Bauteil 3 länger ausgebildet ist und mehrere konusförmige Vorsprünge 7 angeordnet sind, die in die komplementären Ausnehmungen 10 der Profile 2 passen.

Durch das Anziehen der Verbindungselemente 8 bzw. durch das Festschrauben des Verbindungselements 8 geht die formschlüssige Verbindung der konusförmige Vorsprünge 7 in den komplementären Ausnehmungen 10 der Profile 2 in eine kraftschlüssige Verbindung, insbesondere eine Presspassung über.

Durch die in Fig. 1b dargestellte erfindungsgemäße Variante der Verbindungsvorrichtung 1 ist es möglich zwei Profile 2 rechtwinkelig zueinander zu verbinden, ohne dabei die Sichtflächen, beispielsweise eines Tischgestells, durch die Verbindungseinrichtung 1 optisch negativ zu beeinflussen. Dies ist vor allem für allseitig sichtbare, d.h. freistehende Tische vorteilhaft.

Fig. 1c zeigt einen Schnitt durch eine in Fig. 1b dargestellten erfindungsgemäße Baueinheit 9. Es werden die Verbindungselemente 8, die durch Schrauben gebildet werden, gezeigt, wobei diese im oberen Bauteil 3 durch den Durchbruch 15 des konusförmigen Vorsprungs 7 ragen und am unteren Bauteil 3 ebenfalls in einen Durchbruch 15 des gegenüberliegenden konusförmigen Vorsprungs 7 greifen. In einer alternativen, nicht dargestellten Ausführungsform kann im unteren Bauteil 3 auch ein Sackloch 14, wie bereits erwähnt entweder mit oder ohne Gewindebohrung, angeordnet sein. Deutlich erkennbar ist auch, dass durch die konusförmige Ausbildung des Vorsprungs 7 eine kraft- und formschlüssige Verbindung des oberen und unteren Bauteils 3 mit den Profilen 2 erfolgt.

Die Profile 2 müssen nicht notwendigerweise, wie in den Fig. 1a bis 1c dargestellt, ein Hohlprofil 2 ausbilden, sondern können beispielsweise auch von einem C-Profil 2 gebildet sein. Für die erfindungsgemäße Ausbildung einer modularen Baueinheit 9 ist es unerheblich aus welchem Material die Profile hergestellt werden. Vorzugsweise sind die Profile 2 aus Stahl und können durch erfindungsgemäße Verbindungseinrichtungen 1 verbunden werden. Denkbar ist aber auch das Strangpressprofile aus Aluminium oder Magnesium, sowie Kunststoffe miteinander verbunden werden. Die Bauteile 3 werden vorzugsweise im Druckgussverfahren aus Aluminium oder Zinklegierungen hergestellt. Aber auch hier können Kunststoffe bzw. andere Legierungen, die sich in einem formgebenden Verfahren wirtschaftlich herstellen lassen, verwendet werden.

Auch der Querschnitt der Profile kann variieren und beispielsweise polygonal, insbesondere 4-, 5-, 6- oder 8-eckig sein. In einer alternativen Ausführungsform kann das Profil im Querschnitt auch rund oder oval ausgebildet sein.

Der Winkel 16 des konusförmigen Vorsprungs 7 kann variieren. In jedem Fall ist der Konus aber in Richtung des freien Endes 17 des konusförmigen Vorsprungs 7 verjüngend ausgebildet. Die Bauhöhe 18 des konusförmigen Vorsprungs 7 wird an die jeweiligen Anforderungen angepasst. Der Winkel 16 kann über die Bauhöhe variieren, so ist es beispielsweise vorstellbar, dass im Bereich des befestigten Endes 19 des konusförmigen Vorsprungs 7 der Winkel 16 lediglich 1 - 2 ° beträgt und im Bereich des freien Endes 17 einen Wert von 5 - 7 ° beträgt.

Wie in der dargestellten Ausführungsform kann sich der konusförmige Vorsprung 7 der Verbindungsvorrichtung 1 auch um einen stets gleich bleibenden Betrag verringern und die Verjüngung in Richtung des freien Endes 17 durch einen konstanten Wert des Winkels 16 ausgebildet werden.

Wie in Fig. 1c ersichtlich, kann der Durchbruch 15 bzw. das Sackloch 14 des konusförmigen Vorsprungs mittig angeordnet sein, um eine optimale Zentrierung des konusförmigen Vorsprungs 7 in der komplementären Ausnehmung 10 des Profils 2 zu ermöglichen.

Ebenfalls in einer bevorzugten Ausführungsform ist der konusförmige Vorsprung 7 des Bauteils 3 kreisrund ausgebildet. Die kreisrunde Ausformung des konusförmigen Vorsprungs 7 erleichtert einerseits die Anpassung des Vorsprungs in der Ausnehmung 10 des Profils 2 beim Ineinanderfügen der Verbindungsvorrichtung 1 mit dem Profil 2 und andererseits wird durch die kreisrunde Ausbildung des konusförmigen Vorsprungs 7 eine kreisrunde Ausnehmung 10 des Profils 2 erforderlich, welche einfach durch eine Bohrung herstellbar ist, ermöglicht.

Die Oberfläche des konusförmigen Vorsprungs 7 kann eine Struktur, wie z.B. Rillen, Furchen, Noppen, Vorsprünge beliebiger Ausgestaltung, aufweisen. Diese Strukturen können eine Abweichung des konusförmigen Vorsprungs 7 von der kreisrunden Form bedingen.

Es ist auch eine Abweichung von der kreisrunden Ausgestaltung des konusförmigen Vorsprungs 7 mit Tendenz zu einer polygonalen Ausbildung, insbesondere 5-, 6- oder 8-eckig, möglich.

In einer alternativen nicht dargestellten Form kann der konusförmige Vorsprung 7 auch geringfügig von der kreisrunden Form abweichen und beispielsweise oval ausgebildet sein.

In den Fig. 1a bis 1c sind sowohl der obere als auch der untere Bauteil 3 gerade ausgebildet.

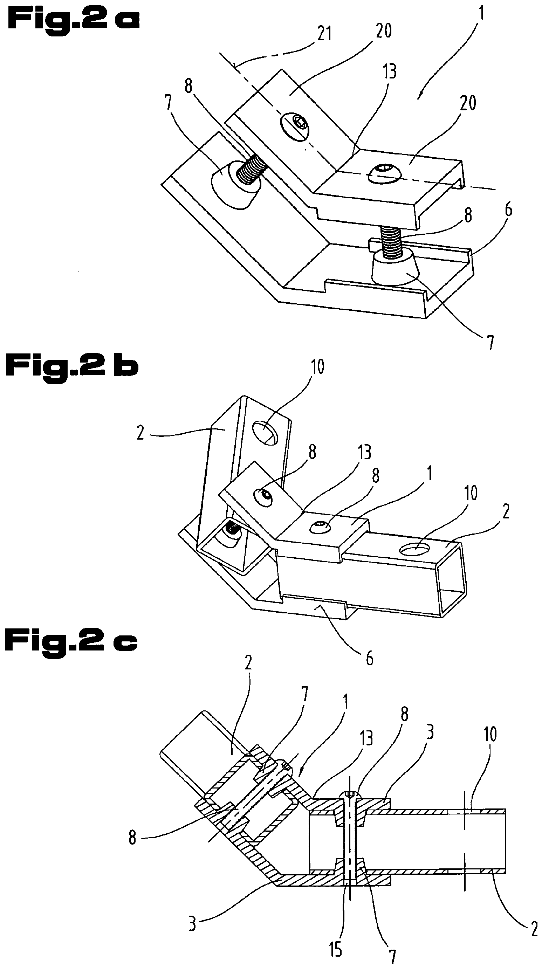

Fig. 2a zeigt eine alternative Ausführungsform der erfindungsgemäßen Verbindungsvorrichtung 1. Die Verbindungsvorrichtung 1 besteht aus den gleichen Teilen wie in Fig. 1a beschrieben. Sie unterscheidet sich dadurch, dass der obere und der untere Bauteil 3 aus zwei Schenkeln 20 bestehen, die nicht in einer Ebene angeordnet sind. Die beiden Schenkel 20 sind gerade in Bezug auf die Längsachse 21 ausgebildet, sie weisen allerdings einen Knick 13 auf und liegen somit nicht auf einer Ebene.

In Fig. 2b wird gezeigt, wie zwei Profile 2 durch die Verbindungseinrichtung 1, wie sie unter 2a beschrieben wurde, verbunden werden können. Da die Profile 2 nicht auf einer Ebene liegen, können sie, sofern sie in einem Tischgestell verwendet werden, beispielsweise zur Anordnung von Platten die in einem Winkel zueinander angeordnet werden sollen, verwendet werden. So kann beispielsweise ein Lesepult oder dergleichen an einem Schreibtisch befestigt werden.

In Fig. 2c wird der Schnitt durch die in Fig. 2a beschriebene Verbindungseinrichtung 1 mit den Profilen 2 gezeigt. Es können dabei die Profile 2 zueinander in einem Winkel abweichend von 180 ° angeordnet werden, bzw. können die beiden Profile 2 auch in einem Winkel von 180 ° angeordnet sein und somit eine Gerade darstellen, aber auf unterschiedlichen Ebenen angeordnet sein.

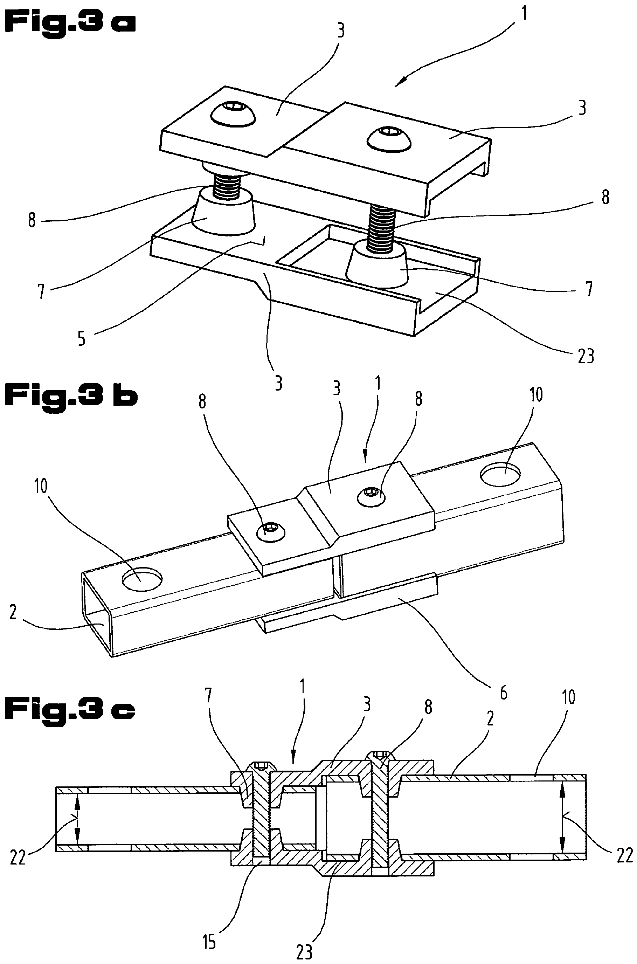

Fig. 3a zeigt eine weitere alternative Ausführungsform der erfindungsgemäßen Verbindungsvorrichtung 1. Die Verbindungsvorrichtung 1 besteht aus zwei einander gegenüber angeordneten Bauteilen 3, die an ihrer Innenseite konusförmige Vorsprünge 7 aufweisen, bei welchen mittig ein Durchbruch 15 bzw. ein Sackloch 14 angeordnet ist, um ein Verbindungselement 8 aufnehmen zu können. An der Innenseite 5 weisen der obere und der untere Bauteil 3 zudem eine flächige Vertiefung 23 auf, in welche ein Profil 2 eingeführt werden kann. An dieser flächigen Vertiefung 23 ist der konusförmige Vorsprung 7 angeordnet. Eine solche erfindungsgemäße Verbindungsvorrichtung 1, wie in Fig. 3a dargestellt, dient zur Verbindung von Profilen 2 unterschiedlichen Querschnitts 22 bzw. Durchmessers.

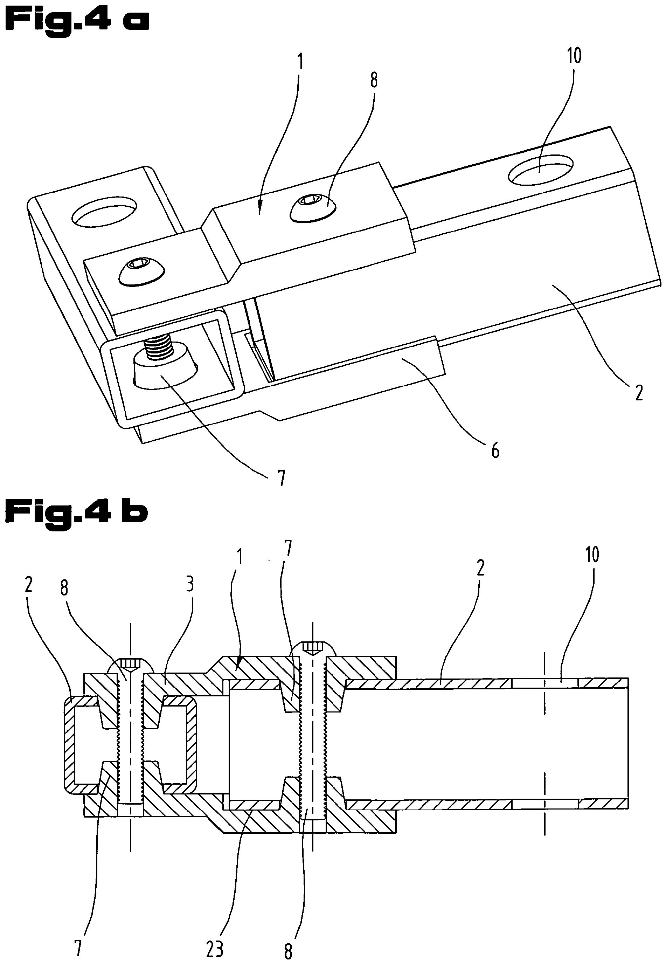

In Fig. 3b wird die Verbindung zweier Profile 2 unterschiedlichen Querschnitts 22 bzw. Durchmessers, die in einem Winkel von 180 ° zueinander angeordnet sind, gezeigt. In einer alternativen Ausführungsform, wie in Fig. 4a gezeigt, sind die Profile 2 in einem Winkel von 90 ° zueinander angeordnet unter Verwendung der gleichen erfindungsgemäßen Verbindungsvorrichtung 1, wie unter Fig. 3a beschrieben.

Fig. 3c zeigt im Schnitt die Anordnung von Profilen 2 in einem Winkel von 180 ° zueinander mit einer Verbindungsvorrichtung 1 wie unter Fig. 3a gezeigt. Die Profile 2 weisen einen unterschiedlichen Querschnitt 22 bzw. Durchmesser auf.

In Fig. 4b wird im Schnitt die Anordnung von zwei Profilen 2 unterschiedlichen Durchmessers in einem Winkel von 90 ° zueinander gezeigt, wobei ebenfalls eine erfindungsgemäße Verbindungsvorrichtung 1 gemäß Fig. 3a verwendet wird.

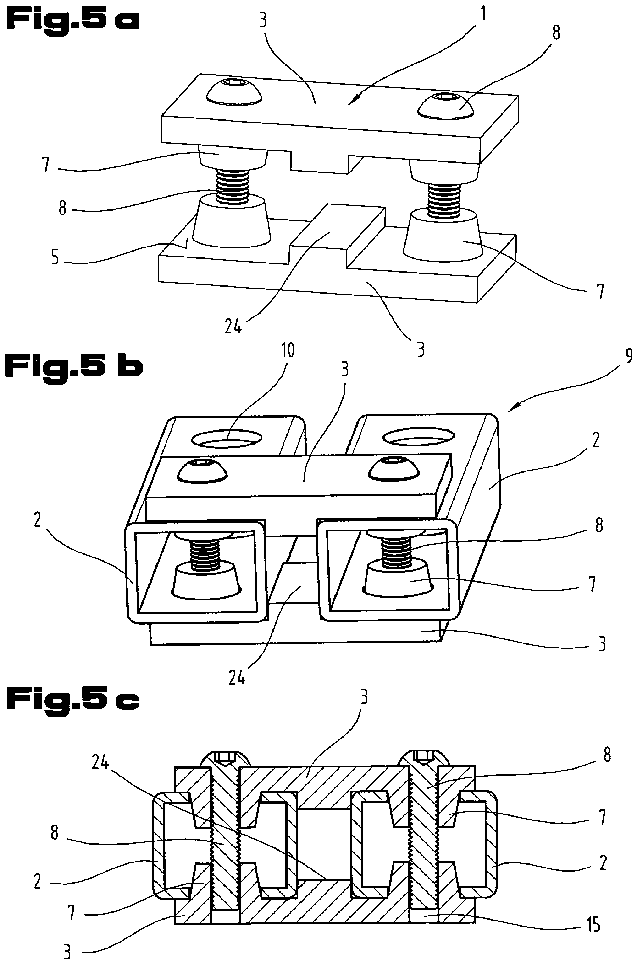

In Fig. 5a wird eine weitere alternative Ausführungsform einer erfindungsgemäßen Verbindungsvorrichtung 1 gezeigt. Die erfindungsgemäße Verbindungsvorrichtung 1 besteht aus zwei einander gegenüber angeordneten Bauteilen 3, die jeweils an der Innenseite 5 konusförmige Vorsprünge 7 aufweisen. Zudem weisen die Bauteile 3 an der Innenseite 5 Stege 24 auf. Die Stege 24 dienen zum Führen bzw. Positionieren der zu verbindenden Profile 2.

In Fig. 5b wird die Baueinheit 9 gezeigt, welche die Verbindungsvorrichtung 1 gemäß Fig. 5a aus den beiden Bauteilen 3 und zwei miteinander zu verbindenden Profilen 2 bildet. Es können dabei zwei oder mehrere Profile 2 zueinander parallel angeordnet sein. In einer alternativen, nicht dargestellten Ausführungsform kann der Steg 24 auch zwei Seitenflächen aufweisen, die nicht parallel zueinander ausgebildet sind, wodurch es ermöglicht wird, das zwei miteinander zu verbindende Profile 2 nicht parallel, sondern in einem definierten Winkel zueinander angeordnet werden können.

Fig. 5c zeigt einen Schnitt durch eine Baueinheit 9, wie sie in Fig. 5b beschrieben wurde. In Fig. 5c wird der Schnitt durch ein Hohlprofil gezeigt. Wie bereits erwähnt, muss nicht notwendiger Weise ein Hohlprofil mit vier Seitenflächen verwendet werden, sondern es kann beispielsweise auch ein C-Profil mit nur drei Seitenwänden zur Herstellung der Baueinheit 9 verwendet werden.

Die erfindungsgemäße Verbindungsvorrichtung 1 kann an einer beliebigen Position zumindest eines der zu verbindenden Profile 2 angeordnet sein und muss nicht notwendiger weise, wie in den Fig. 1b, und 4a dargestellt, in einem randständigen Bereich vorliegen.

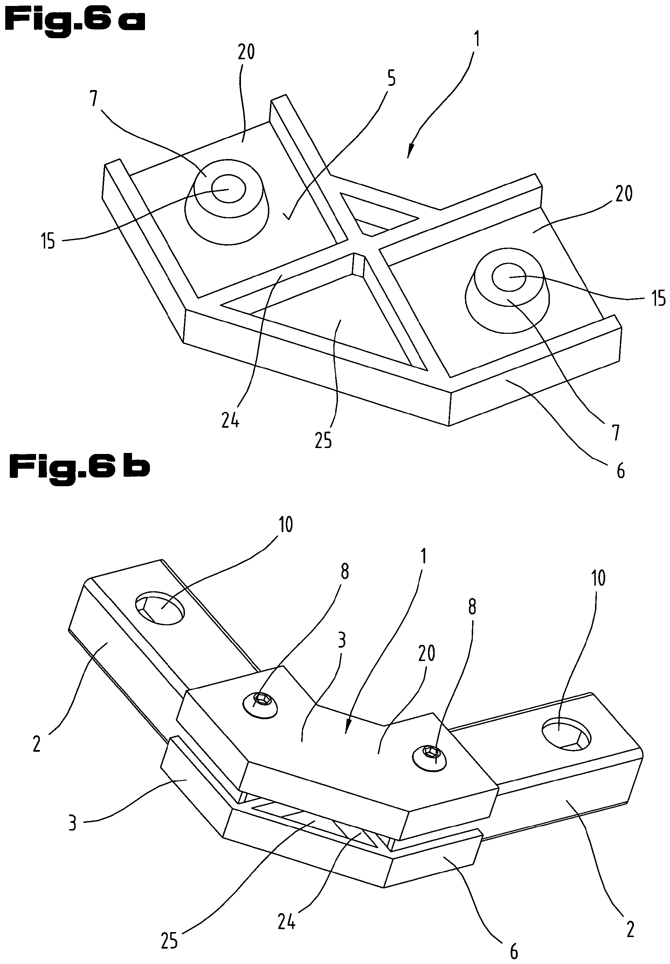

Fig. 6a zeigt eine Verbindungsvorrichtung 1. Der obere und der untere Bauteil 3 der Verbindungsvorrichtung 1 bestehen aus zwei Schenkeln 20, welche zueinander in einem Winkel von 90 ° angeordnet sind, wobei zur Verbindung der beiden Schenkel 20 ein Eckstück 25 ausgeformt ist. Auf der Innenseite 5 sind neben den konusförmigen Vorsprüngen 7 auch Stege 24 angeordnet. Die Seitenflächen 6 des Bauteils 3 sind hochgezogen und stellen somit eine Führung für das Profil 2 dar. Zur Erhöhung der Stabilität der beiden Schenkel 20 zueinander kann ein Steg 24 an den jeweiligen Seitenflächen 6, welche innen liegend sind angeordnet sein.

In einer alternativen, nicht dargestellten Ausführungsvariante müssen die beiden Schenkel 20 nicht notwendigerweise über ein Eckstück 25 miteinander verbunden sein, sondern können auch eine Ecke mit einem variablen Winkel, wie z.B. 45 °, 60° oder 90 ° ausbilden, wobei das Eckstück 25 wegfällt.

Alternativ zu der in Fig. 6a dargestellten Ausführungsform der Verbindungseinrichtung 1 können, wie bereits beschrieben, die beiden Schenkel 20 auch in einem Winkel von 90 ° ohne Anordnung des Eckstücks 25 angeordnet sein. Weiters kann dabei, zumindest im Bereich der Ecke an einem Schenkel 20 die Seitenfläche 6 fehlen, wodurch es ermöglicht wird, dass eines der beiden zu verbindenden Profile 2 nicht randständig verbunden wird, sondern an einem beliebigen Bereich des Profils 2 angeordnet ist.

In Fig. 6b wird eine Baueinheit 9 unter Verwendung einer in Fig. 6a beschriebenen Verbindungsvorrichtung 1 gezeigt. Die Baueinheit 9 besteht aus jeweils zwei einander gegenüber angeordneten Bauteilen 3, die aus zwei Schenkeln 20 besteht, die einen Winkel von 90 ° zueinander bilden. An der Innenseite 5 sind jeweils konusförmige Vorsprünge 7 angeordnet, welche einen Durchbruch 15 bzw. ein Sackloch 14 aufweisen, durch welche das Verbindungselement 8 geführt wird und die Verbindungsvorrichtung 1 mit den Profilen 2 verbunden werden kann. Die Profile 2 weisen eine komplementäre Ausnehmung 10 zum konusförmigen Vorsprung 7 auf. Somit wird eine weitere alternative Ausführungsform zu jenen in Fig. 1b, 2b und 4a in einem Winkel von 90 ° gezeigt.

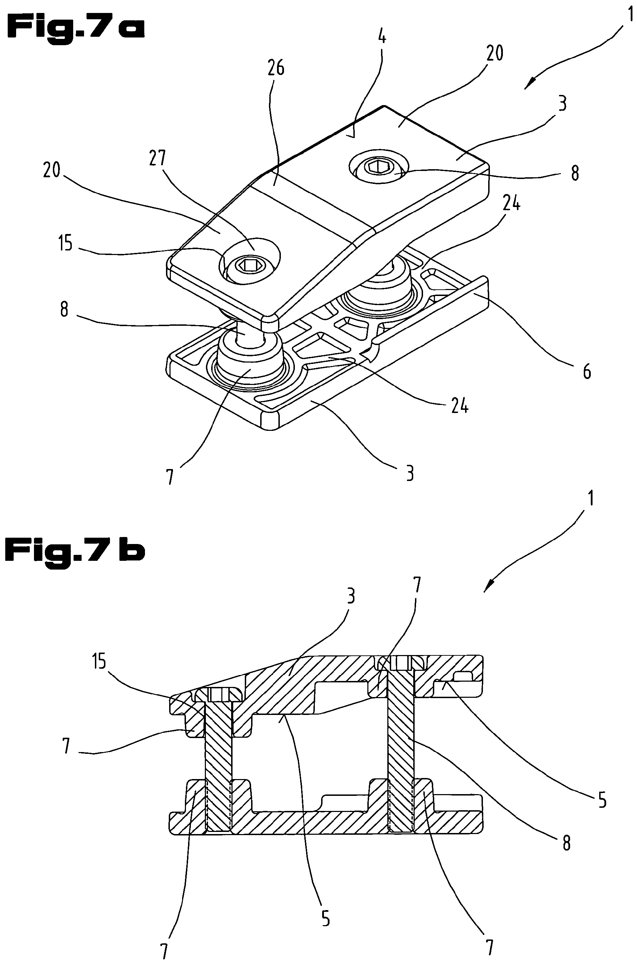

Fig. 7a zeigt eine weitere alternative Ausführungsform der Verbindungsvorrichtung 1, die ebenfalls aus einem unteren und einem oberen Bauteil 3 gebildet ist. Der obere Bauteil 3 weist an der Außenseite 4 eine Krümmung 26 auf. Die Innenseite 5 ist in den beiden Schenkeln 20 des oberen Bauteils 3 auf unterschiedlichen Niveaus ausgebildet. Zudem weist die Innenseite 5 des oberen als auch unteren Bauteils 3 eine Vielzahl von Stegen 24 auf. Der untere Bauteil 3 weist erhabene Seitenflächen 6 an zumindest einem Schenkel 20 auf. In jedem Schenkel 20 eines jeden Bauteils 3 ist ein konusförmiger Vorsprung 7 angeordnet, der die Verbindungselemente 8 enthält. Um eine plane Oberfläche an der Außenseite 4 der Bauteile 3 zu erzielen kann das Verbindungselement 8, insbesondere dessen Ende, welches in Form eines Kopfes ausgebildet ist, versenkt angeordnet sein, wobei die Außenseite 4 eine entsprechende Vertiefung 27 im Bereich des Durchbruchs 15 aufweist, um den Kopf aufnehmen zu können.

In Fig. 7b ist die Verbindungseinrichtung 1 aus Fig. 7a im Schnitt dargestellt. Die unterschiedlichen Niveaus der Innenseite 5 des oberen Bauteils 3 sind im Schnitt dargestellt. Die Bauteile 3 weisen konusförmige Vorsprünge 7 mit Durchbrüchen 15 auf, wobei wahlweise eine Gewindebohrung angeordnet sein kann. Die Verbindung der beiden Bauteile 3 erfolgt über die Verbindungselemente 8, die als Schrauben oder Bolzen ausgebildet sein können.

In einer bevorzugten Ausführungsform ist der Durchbruch 15 im oberen Bauteil 3 ohne und im unteren Bauteil 3 mit einer Gewindebohrung ausgeführt.

Weiters ist es möglich die Verbindungseinrichtung 1 T-förmig auszubilden, wobei ebenfalls die Seitenflächen 6 Führungen für die Profile 2 darstellen und an der Innenseite 5 konusförmige Vorsprünge 7 angeordnet sind.

Bedingt durch das Herstellverfahren können an der Innenseite 5 der Bauteile 3 auch mehrere Stege 24 mit unterschiedlichen Höhen angeordnet sein.

Die Oberfläche des erfindungsgemäßen Bauteils 3 kann, wie bereits erwähnt, eine flächige Vertiefung 23 aufweisen, bzw. kann das unterschiedliche Niveau der Innenseiten 5 eines Bauteils 3 auch dadurch bedingt sein, dass die beiden Schenkel 20 des Bauteils 3 Stege 24 unterschiedlicher Höhe aufweisen und somit die konusförmigen Vorsprünge 7 an einem unterschiedlichen Niveau an der Innenseite 5 des Bauteils 3 angeordnet sind. Zudem kann das unterschiedliche Niveau der Innenseite 5 zur Anordnung der konusförmigen Vorsprünge 7 auch durch Abstufungen der Außenseite 4 des Bauteils 3 bedingt sein.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten der Verbindungsvorrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Verbindungseinrichtung 1 bzw. der modularen Baueinheit 9 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

### Bezugszeichenaufstellung

- 1: Verbindungsvorrichtung
- 2: Profil
- 3: Bauteil
- 4: Außenseite
- 5: Innenseite

- 6: Seitenfläche
- 7: Vorsprung
- 8: Verbindungselement
- 9: Baueinheit
- 10: Ausnehmung

- 11: Oberseite
- 12: Unterseite
- 13: Knick
- 14: Sackloch
- 15: Durchbruch

- 16: Winkel
- 17: Ende
- 18: Bauhöhe
- 19: Ende
- 20: Schenkel

- 21: Längsachse
- 22: Querschnitt
- 23: Vertiefung
- 24: Steg
- 25: Eckstück

- 26: Krümmung
- 27: Vertiefung

## Patentansprüche

1. Modulares Tischgestell umfassend Profile (2) die rechtwinkelig zueinander angeordnet sind und die über eine Verbindungsvorrichtung (1) miteinander verbundenen sind, wobei die Verbindungsvorrichtungen (1) zwei Bauteile (3) umfasst, die an gegenüberliegenden Profilwänden angeordnet sind und die eine Außen- (4), eine Innenseite (5) und Seitenflächen (6) aufweisen, und wobei an der Innenseite (5) der Bauteile (3) zwei Vorsprünge (7) angeordnet sind, **dadurch gekennzeichnet, dass** die Vorsprünge (7) der Bauteile (3) konusförmig ausgebildet sind, die ein mit den Bauteilen (3) verbundenes Ende (19) und ein freies Ende (17) aufweisen und sich in Richtung des freien Endes (17) verjüngen, dass weiters die Profile (2) Ausnehmungen (10) komplementär zu den konusförmigen Vorsprüngen (7) aufweisen, die insbesondere kreisrund ausgebildet sind, und ein Ende eines Profils (2) an eine Seitenfläche eines anderen Profils (2) annähernd anstößt, wobei je ein konusförmiger Vorsprung (7) in je einer Ausnehmungen (10) der verbundenen Profile (2) unter Ausbildung einer formschlüssigen Verbindung angeordnet ist und dass die Profile (2) derart mit der Verbindungsvorrichtung (1) verbunden sind, dass eine Profilfläche frei von Verbindungsvorrichtungen bleibt.

2. Tischgestell nach Anspruch 1, **dadurch gekennzeichnet, dass** der Wert des sich verjüngenden konusförmige Vorsprungs (7) einen Winkel (16) ausgewählt aus einem Bereich mit einer oberen Grenze von 45 °, vorzugsweise 40 °, insbesondere 30 °, und einer unteren Grenze von 0,5 °, vorzugsweise 1 °, insbesondere 5 °, aufweist.

3. Tischgestell nach Anspruch 2, **dadurch gekennzeichnet, dass** der zumindest eine konusförmige Vorsprung (7) eine Bauhöhe (18) aufweist und der Winkel (16) über die Bauhöhe (18) variiert.

4. Tischgestell nach einem der Ansprüche 1 bis 3, **dadurch gekennzeichnet, dass** der konusförmige Vorsprung (7) einen Durchbruch (15) oder Sackloch (14), gegebenenfalls mit einem Gewinde, aufweist.

5. Tischgestell nach Anspruch 4, **dadurch gekennzeichnet, dass** der Durchbruch (15) oder das Sackloch (14) annähernd mittig des konusförmigen Vorsprungs (7) angeordnet ist.

6. Tischgestell nach einem der Ansprüche 1 bis 5, **dadurch gekennzeichnet, dass** der konusförmige Vorsprung (7) annähernd kreisrund ist, wobei gegebenenfalls die Oberfläche des Konus strukturiert, insbesondere gefurcht, gerillt, gezackt, genoppt, etc., ist.

7. Tischgestell nach einem der Ansprüche 1 bis 6, **dadurch gekennzeichnet, dass** die Bauteile (3) gerade ausgebildet sind.

8. Tischgestell nach einem der Ansprüche 1 bis 6, **dadurch gekennzeichnet, dass** die Bauteile (3) zwei Schenkel (20) aufweisen und diese in einem Winkel (16) zueinander angeordnet sind.

9. Tischgestell nach einem der Ansprüche 1 bis 8, **dadurch gekennzeichnet, dass** der Bauteil (3) als obere bzw. untere Platte ausgebildet ist und erhabene Seitenflächen (6) aufweist und ein Profil (2) zumindest bereichsweise umgreift.

10. Tischgestell nach einem der Ansprüche 1 bis 9, **dadurch gekennzeichnet, dass** die Innenseite (5) der Bauteile (3) eine flächige Vertiefung (23) aufweist.

11. Tischgestell nach Anspruch 10, **dadurch gekennzeichnet, dass** in der flächigen Vertiefung (23) der konusförmige Vorsprung (7) angeordnet ist.

12. Tischgestell nach einem der Ansprüche 1 bis 11, **dadurch gekennzeichnet, dass** an der Innenseite (5) der Bauteile (3) Erhebungen in Form von Stegen (24) ausgebildet sind.

13. Tischgestell nach einem der Ansprüche 1 bis 12, **dadurch gekennzeichnet, dass** Außenseite (4) der Bauteile (3) gekrümmt ist oder eine Abstufung aufweist.

14. Tischgestell nach einem der Ansprüche 9 bis 13, **dadurch gekennzeichnet, dass** die Platte gebogen bzw. geknickt ist.

15. Tischgestell nach einem der Ansprüche 1 bis 13, **dadurch gekennzeichnet, dass** diese aus Kunststoff, Metall, z.B. Stahl, Aluminium, Zink oder deren Legierungen, gebildet ist.

16. Tischgestell nach Anspruch 1 bis 15, **dadurch gekennzeichnet, dass** die zumindest eine komplementäre Ausnehmung (10) am Endbereich betreffend die Längserstreckung eines Profils (2) angeordnet ist.

17. Tischgestell nach einem der Ansprüche 4 bis 16, **dadurch gekennzeichnet, dass** ein Verbindungselement (8), insbesondere Schraube, im Durchbruch (15) bzw. Sackloch (14) der Bauteile (3) angeordnet ist, und eine kraftschlüssige Verbindung der Verbindungsvorrichtung (1) und der Profile (2) ausgebildet ist.

18. Tischgestell nach einem der Ansprüche 1 bis 17, **dadurch gekennzeichnet, dass** weitere miteinander verbundene Profile (2) in einem Winkel von 180° zueinander angeordnet sind.

## Claims

1. A modular table frame comprising profiles (2) which are arranged at right-angles to one another and which are connected with one another via a connecting device (1), wherein the connecting device (1) comprises two components (3) which are arranged on opposite profile walls and which have an outer side (4), an inner side (5) and side faces (6), and wherein on the inner side (5) of the components (3) two projections (7) are arranged, **characterized in that** the projections (7) of the components (3) are constructed in a cone shape, which have an end (19) connected with the components (3) and a free end (17) and taper in the direction of the free end (17), that furthermore the profiles (2) have recesses (10) in a complementary manner to the cone-shaped projections (7), which in particular are constructed so as to be circular, and one end of a profile (2) approximately abuts a side face of another profile (2), wherein in each case a cone-shaped projection (7) is arranged in each case in a recess (10) of the connected profiles (2) with the formation of a form-fitting connection, and that the profiles (2) are connected with the connecting device (1) such that a profile surface remains free of connecting devices.

2. The table frame according to claim 1, **characterized in that** the value of the tapering cone-shaped projection (7) has an angle (16) selected from a range with an upper limit of 45°, preferably 40°, in particular 30°, and a lower limit of 0.5°, preferably 1° in particular 5°.

3. The table frame according to claim 2, **characterized in that** the at least one cone-shaped projection (7) has an overall height (18) and the angle (16) varies over the overall height (18).

4. The table frame according to one of claims 1 to 3, **characterized in that** the cone-shaped projection (7) has an aperture (15) or blind hole (14), if applicable with a thread.

5. The table frame according to claim 4, **characterized in that** the aperture (15) or blind hole (14) is arranged approximately centrally to the cone-shaped projection (7).

6. The table frame according to one of claims 1 to 5, **characterized in that** the cone-shaped projection (7) is approximately circular, wherein if applicable the surface of the cone is structured, in particular furrowed, grooved, serrated, nubbed, etc.

7. The table frame according to one of claims 1 to 6, **characterized in that** the components (3) are constructed so as to be straight.

8. The table frame according to one of claims 1 to 6, **characterized in that** the components (3) have two legs (20) and these are arranged at an angle (16) with respect to one another.

9. The table frame according to one of claims 1 to 8, **characterized in that** the component (3) is constructed as an upper or respectively lower plate and has raised side faces (6) and embraces a profile (2) at least in some areas.

10. The table frame according to one of claims 1 to 9, **characterized in that** the inner side (5) of the components (3) has a planar depression (23).

11. The table frame according to claim 10, **characterized in that** the cone-shaped projection (7) is arranged in the planar depression (23).

12. The table frame according to one of claims 1 to 11, **characterized in that** elevations in the form of webs (24) are formed on the inner side (5) of the components (3).

13. The table frame according to one of claims 1 to 12, **characterized in that** the outer side (4) of the components (3) is curved or has a graduation.

14. The table frame according to one of claims 9 to 13, **characterized in that** the plate is bent or respectively kinked.

15. The table frame according to one of claims 1 to 13, **characterized in that** it is formed from plastic, metal, e.g. steel, aluminium, zinc or alloys thereof.

16. The table frame according to claim 1 to 15, **characterized in that** the at least one complementary recess (10) is arranged at the end region pertaining to the longitudinal extent of a profile (2).

17. The table frame according to one of claims 4 to 16, **characterized in that** a connecting element (8), in particular a screw, is arranged in the aperture (15) or respectively blind hole (14) of the components (3), and a force-fitting connection of the connecting device (1) and of the profiles (2) is formed.

18. The table frame according to one of claims 1 to 17, **characterized in that** further profiles (2), connected with one another, are arranged at an angle of 180° to one another.

## Revendications

1. Bâti de table modulaire comprenant des profilés (2) qui sont disposés perpendiculairement les uns par rapport aux autres et reliés entre eux par l'intermédiaire d'un dispositif de liaison (1), les dispositifs de liaison (1) comprenant deux pièces (3) disposées au niveau de parois de profilés opposées et qui comprennent un côté extérieur (4), un côté intérieur (5) et des surfaces latérales (6) et, au niveau du côté intérieur (5) des pièces (3), se trouvant deux saillies (7), **caractérisé en ce que** les saillies (7) des pièces (3) présentent une forme conique qui comprennent une extrémité (19) reliée aux pièces (3) et une extrémité libre (17) et se rétrécissent en direction de l'extrémité libre (17), **en ce qu'**en outre, les profilés (2) présentent des évidements (10), complémentaires aux saillies coniques (7), qui présentent plus particulièrement une forme ronde et une extrémité d'un profilé (2) bute approximativement contre une surface latérale d'un autre profilé (2), chaque saillie conique (7) étant disposé dans chaque évidement (10) des profilés (2) assemblés en formant une liaison par complémentarité de forme et **en ce que** les profilés (2) sont reliés avec le dispositif de liaison (1) de façon à ce qu'une surface de profilé reste libre des dispositifs de liaison.

2. Bâti de table selon la revendication 1, **caractérisé en ce que** l'angle (16) formé par la saillie conique (7) présente une valeur sélectionnée dans un intervalle avec une limite supérieure de 45°, de préférence de 40°, plus particulièrement de 30° et une limité inférieure de 0,5°, de préférence de 1°, plus particulièrement de 5°.

3. Bâti de table selon la revendication 2, **caractérisé en ce que** l'au moins une saillie conique (7) présente une hauteur (18) et l'angle (16) varie sur la hauteur (18).

4. Bâti de table selon l'une des revendications 1 à 3, **caractérisé en ce que** la saillie conique (7) présente un passage (15) ou un trou borgne (14), le cas échéant avec un filetage.

5. Bâti de table selon la revendication 4, **caractérisé en ce que** le passage (15) ou le trou borgne (14) est disposé approximativement au centre de la saillie conique (7).

6. Bâti de table selon l'une des revendications 1 à 5, **caractérisé en ce que** la saillie conique (7) est approximativement de forme ronde, la surface du cône étant le cas échéant structurée, plus particulièrement striée, rainurée, dentelée, perforée etc.

7. Bâti de table selon l'une des revendications 1 à 6, **caractérisé en ce que** les pièces (3) sont droites.

8. Bâti de table selon l'une des revendications 1 à 6, **caractérisé en ce que** les pièces (3) présentent deux montants (20) et ceux-ci forment entre eux un angle (16).

9. Bâti de table selon l'une des revendications 1 à 8, **caractérisé en ce que** la pièce (3) est conçue comme une plaque supérieure ou inférieure et présente des surfaces latérales surélevées (6) et entoure au moins partiellement un profilé (2).

10. Bâti de table selon l'une des revendications 1 à 9, **caractérisé en ce que** le côté intérieur (5) des pièces (3) présente une cavité plane (23).

11. Bâti de table selon la revendication 10, **caractérisé en ce que**, dans la cavité plane (23) se trouve la saillie conique (7).

12. Bâti de table selon l'une des revendications 1 à 11, **caractérisé en ce que**, au niveau du côté intérieur (5) des pièces (3) sont formés bossages en formes de nervures (24).

13. Bâti de table selon l'une des revendications 1 à 12, **caractérisé en ce que** le côté extérieur (4) des pièces (3) est incurvée et présente un épaulement.

14. Bâti de table selon l'une des revendications 9 à 13, **caractérisé en ce que** la plaque est pliée.

15. Bâti de table selon l'une des revendications 1 à 13, **caractérisé en ce que** celui-ci est constitué de matière plastique, de métal, par exemple d'acier, d'aluminium, de zinc ou d'alliages de ces métaux.

16. Bâti de table selon l'une des revendications 1 à 15, **caractérisé en ce que** l'au moins un évidement complémentaire (10) est disposé au niveau de zone d'extrémité en ce qui concerne l'extension longitudinale d'un profilé (2).

17. Bâti de table selon l'une des revendications 4 à 16, **caractérisé en ce qu'**un élément de liaison (8), plus particulièrement une vis, est disposé dans le passage (15) ou le trou borgne (14) des pièces (3) et une liaison par complémentarité de forme est établie entre le dispositif de liaison (1) et les profilés (2).

18. Bâti de table selon l'une des revendications 1 à 17, **caractérisé en ce que** d'autres profilés (2) reliés entre eux forment entre eux un angle de 180°.
